# EUROPEAN PATENT SPECIFICATION

(11) **EP 2 814 201 B1**
(45) Date of publication and mention of the grant of the patent: **10.07.2019**
(21) Application number: 12883103.9
(22) Date of filing: 20.08.2012
(51) Int. Cl.: H04L 12/24, G06F 21/10

(54) **NOTIFICATION MESSAGE SENDING METHOD AND MANAGEMENT CONTROL APPARATUS**
VERFAHREN ZUM SENDEN VON BENACHRICHTIGUNGEN UND VERWALTUNGSSTEUERVORRICHTUNG
PROCÉDÉ D'ENVOI DE MESSAGES DE NOTIFICATION ET DISPOSITIF DE CONTRÔLE DE LA GESTION

(43) Date of publication of application: 17.12.2014
(73) Proprietor: Huawei Technologies Co., Ltd., Longgang District Shenzhen, Guangdong 518129 (CN)
(72) Inventor: WANG, Zhihong, Shenzhen Guangdong 518129 (CN)
(74) Representative: Körber, Martin Hans
(86) International application number: PCT/CN2012/080348
(87) International publication number: WO 2014/029061

(56) References cited:
- CN-A- 101 374 123
- CN-A- 102 456 038
- CN-A- 102 624 570
- James Bruce: "How To Use Find My iPhone To Get Your Stolen iPhone Back", , 6 November 2011 (2011-11-06), XP055161341, Internet Retrieved from the Internet: URL:http://www.makeuseof.com/tag/find-ipho ne-stolen-iphone/ [retrieved on 2015-01-12]

## Description

### TECHNICAL FIELD

The present invention relates to the technical field of communications, in particular, to a method and system for sending a notification message, a management control apparatus, and a terminal device.

### Background

Along with the development of communication technologies, a user may perform a flexible management control operation on a terminal device, for example, a mobile phone, by using a remote control platform, for example, a control server. The operation includes remote-locking the terminal device through the remote control platform, remote-destroying data on the terminal device, forwarding an incoming call or a short message of the terminal device, and the like. By performing the flexible management control operation on the terminal device, the user may use the terminal device conveniently. When the terminal device is forgotten at somewhere or is lost, the user may perform locating on the terminal device through the remote control platform, and perform the flexible management control operation on the terminal device according to location information of the terminal device, for example, if the user leaves the terminal device at home, the user may forward, through the remote control platform, an incoming call or a short message of the terminal device to another receiving device of the user, so as to avoid missing a corresponding incoming call or short message; if the terminal device is lost, the user may perform remote backup on information on the terminal device through the remote control platform and delete the information on the terminal device, so as to avoid personal information leakage.

Before the user performs the flexible management control operation on the terminal device through the control server, it is needed to send a management control request message to the terminal device through the control server, so that the user can perform the management control operation on the terminal device through the control server. If the management control request message sent by the control server cannot reach the terminal device, for example, the terminal being lost or left at somewhere is powered off or out of reach, the user needs to wait at a login management interface User Portal provided by a user portal server until the management control request message sent by the control server reaches the terminal device, so as to perform the management control operation on the terminal device in time. However, currently, after the management control request message sent by the control server reaches the terminal device, the control server cannot proactively instruct the user to perform the management control operation on the terminal device.
James Bruce: "How To Use Find My iPhone To Get Your Stolen iPhone Back" (6 November 2011, XP055161341) shows a method "Find My iPhone". Accordingly, when the mobile device is "stolen" and "offline", the "Find My iPhone" service may register an email address of the user and may email the user when the mobile device is found.

### Summary

Accordingly, the present application provides a method and system for sending a notification message, a management control apparatus, and a terminal device, so as to solve the problem that after a management control instruction sent by a control server reaches the terminal device, the control server cannot proactively instruct a user to perform a management control operation on the terminal device.

One aspect of the present application provides a method for sending a notification message according to claim 1.

Another aspect of the present application provides a management control apparatus according to claim 4.

In embodiments of the present invention, after the control server receives the management control response message returned by the terminal device, the control server triggers, according to the sending address of the notification message, the notification message sending server to send the notification message to the receiving device corresponding to the sending address of the notification message, so that the user can learn through the receiving device in time that it is possible to perform the management control operation on the terminal device.

### Brief description of drawings

FIG. 1 is a schematic flow chart of an embodiment of a method for sending a notification message according to an embodiment of the present invention;
FIG. 2 is a schematic flow chart of another embodiment of a method for sending a notification message according to an embodiment of the present invention;
FIG. 3 is an application scenario diagram of an embodiment of the present invention;
FIG. 4 is a schematic flow chart of another embodiment of a method for sending a notification message according to an embodiment of the present invention;
FIG. 5 is a schematic structural diagram of an embodiment of a management control apparatus according to an embodiment of the present invention;
FIG. 6 is a schematic structural diagram of another embodiment of a management control apparatus according to an embodiment of the present invention;
FIG. 7 is a schematic structural diagram of an embodiment of a terminal device according to an embodiment of the present invention;
FIG. 8 is a schematic structural diagram of another embodiment of a terminal device according to an embodiment of the present invention; and
FIG. 9 is a schematic structural diagram of an embodiment of a system for sending a notification message according to an embodiment of the present invention.

### DESCRIPTION OF EMBODIMENTS

In order to make the objectives, technical solutions, and advantages of the present invention more comprehensible, the technical solution of the present invention is to be clearly and completely described in the following with reference to the accompanying drawings. It is obvious that the embodiments to be described are a part rather than all of the embodiments of the present invention. All other embodiments obtained by persons skilled in the art based on the embodiments of the present invention without creative efforts shall fall within the protection scope of the present invention.

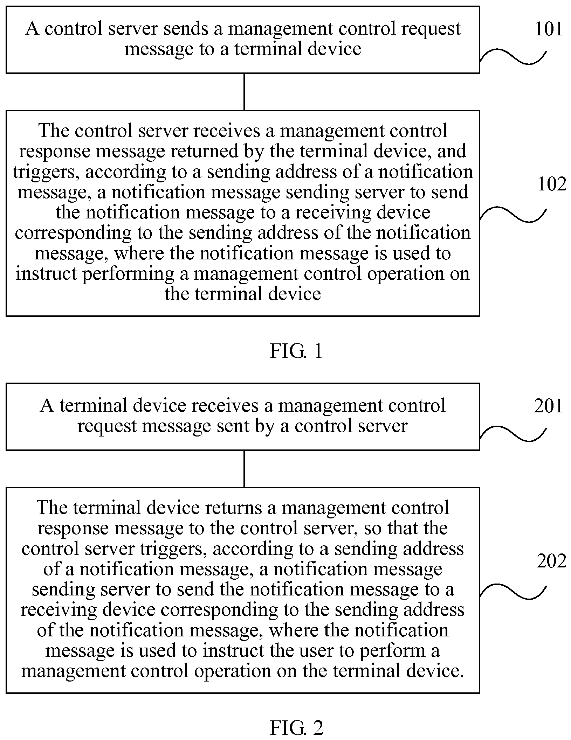

FIG. 1 is a schematic flow chart of an embodiment of a method for sending a notification message according to an embodiment of the present invention. As shown in FIG. 1, the method includes:
Step 101: A control server sends a management control request message to a terminal device.

In the embodiment of the present invention, the control server is configured to provide a management control function for the terminal device, specifically, the control server may send, according to an operation of a user, the management control request message to the terminal device, and provide a feedback result to the user according to a processing result of the management control request message returned by the terminal device. In the embodiment of the present invention, the user may be an owner of the terminal device.

It should be further noted that, in the embodiment of the present invention, the terminal device may be any electronic product capable of performing communication with the control server, including, but not limited to, a mobile phone, a computer, and the like.

Step 102: The control server receives a management control response message returned by the terminal device, and triggers, according to a sending address of a notification message, a notification message sending server to send the notification message to a receiving device corresponding to the sending address of the notification message, where the notification message is used to instruct performing a management control operation on the terminal device.

In the embodiment of the present invention, the terminal device, after receiving the management control request message sent by the control server, executes corresponding management control processing according to the management control request message, and sets the terminal device to a state capable of receiving a management control instruction and then performing the management control operation according to the management control instruction. The terminal device, after completing the processing, reports a corresponding processing result to the control server. The manner of the terminal device executing the corresponding management control processing according to the management control request message includes, but not limited to, the following manners:
Manner 1: The terminal device acquires, according to the management control request message, a communication record of the terminal device, such as, a short message log, a call log, or a mail record.
Manner 2: The terminal device acquires, according to the management control request message, location information of the terminal device, for example, a navigation track of the terminal device.

In the embodiment of the present invention, the sending address of the notification message may be a sending address that is used for receiving the notification message sent by the control server and is set at a login management interface provided by a user portal server, when the management control request message cannot reach terminal device, where the sending address includes a short message number, a phone number, or an email address.

It should be noted that, in the embodiment of the present invention, according to different sending addresses of the notification message, the control server triggers the notification message sending server to send the notification message to a receiving device corresponding to the sending address of the notification message in different manners, for example,

When the sending address of the notification message is a short message number, the implementation of triggering the notification message sending server to send the notification message to a receiving device corresponding to the sending address of the notification message, where the notification message is used to instruct the user to perform the management control operation on the terminal device through the control server may be specifically: invoking an interface provided by a short message server, and sending a short message to a receiving device corresponding to the short message number according to the short message number, where the short message is used to instruct the user to perform the management control operation on the terminal device through the control server.

Moreover, when the sending address of the notification message is a phone number, the implementation of triggering the notification message sending server to send the notification message to a receiving device corresponding to the sending address of the notification message, where the notification message is used to instruct the user to perform the management control operation on the terminal device through the control server may be specifically: invoking an interface provided by a phone server, and making a phone call to a receiving device corresponding to the phone number according to the phone number, where the phone call is used to instruct the user to perform the management control operation on the terminal device through the control server.

Moreover, when the sending address of the notification message is an email address, the implementation of triggering the notification message sending server to send the notification message to a receiving device corresponding to the sending address of the notification message, where the notification message is used to instruct the user to perform the management control operation on the terminal device through the control server, may be specifically: invoking an interface provided by an email server, and sending an email to a receiving device corresponding to the email address according to the email address, where the email is used to instruct the user to perform the management control operation on the terminal device through the control server.

It should be further noted that, in the embodiment of the present invention, the receiving device may be any electronic product having a communication function, including, but not limited to, a mobile phone, a computer, and the like.

Moreover, it should be further noted that, in the embodiment of the present invention, the notification message sending server is configured to send the notification message to the receiving device used for receiving the notification message and set by the user, for example, after a mobile phone of the user is left at home or is lost, the user may set a colleague's mobile phone or a second mobile phone of the user as the receiving device for receiving the notification message, and after the control server sends the management control request message to the mobile phone of the user that is left or lost, the control server immediately sends the notification message to the colleague's mobile phone or the second mobile phone of the user that is set by the user.

The notification message sending server includes, but not limited to: a short message server, a phone server, and an email server.

In the embodiment of the present invention, after the control server receives the management control response message returned by the terminal device, the control server triggers, according to the sending address of the notification message, the notification message sending server to send the notification message to the receiving device corresponding to the sending address of the notification message, so that the user can learn through the receiving device in time that it is possible to perform the management control operation on the terminal device.

FIG. 2 is a schematic flow chart of another embodiment of a method for sending a notification message according to an embodiment of the present invention. As shown in FIG. 2, the method includes:
Step 201: A terminal device receives a management control request message sent by a control server.

In the embodiment of the present invention, the control server is configured to provide a management control function for the terminal device, specifically, the control server may, according to an operation of a user, send the management control request message to the terminal device, and provide a feedback result to the user according to a processing result of the management control request message returned by the terminal device.

Moreover, in the embodiment of the present invention, the terminal device may be any electronic product capable of performing communication with the control server, including, but not limited to, a mobile phone, a computer, and the like.

Step 202: The terminal device returns a management control response message to the control server, so that the control server triggers, according to a sending address of a notification message, a notification message sending server to send the notification message to a receiving device corresponding to the sending address of the notification message, where the notification message is used to instruct the user to perform a management control operation on the terminal device through the control server.

In the embodiment of the present invention, the terminal device, after receiving the management control request message sent by the control server, executes corresponding management control processing according to the management control request message, and sets the terminal device to a state capable of receiving a management control instruction and then performing the management control operation according to the management control instruction. The terminal device, after completing the processing, reports a corresponding processing result to the control server. The manner of the terminal device executing the corresponding management control processing according to the management control request message includes, but not limited to, the following manners:
Manner 1: The terminal device acquires, according to the management control request message, a communication record of the terminal device, such as, a short message log, a call log, or a mail record.
Manner 2: The terminal device acquires, according to the management control request message, location information of the terminal device, for example, a navigation track of the terminal device.

In the embodiment of the present invention, the sending address of the notification message may be a sending address that is used for receiving the notification message sent by the control server and is set at a login management interface provided by a user portal server, when the management control request message cannot reach terminal device, where the sending address includes a short message number, a phone number, or an email address.

In the embodiment of the present invention, the terminal device returns the management control response message to the control server, so that the control server triggers, according to the sending address of the notification message, the notification message sending server to send the notification message to the receiving device corresponding to the sending address of the notification message, so that the user can learn through the receiving device in time that it is possible to perform the management control operation on the terminal device.

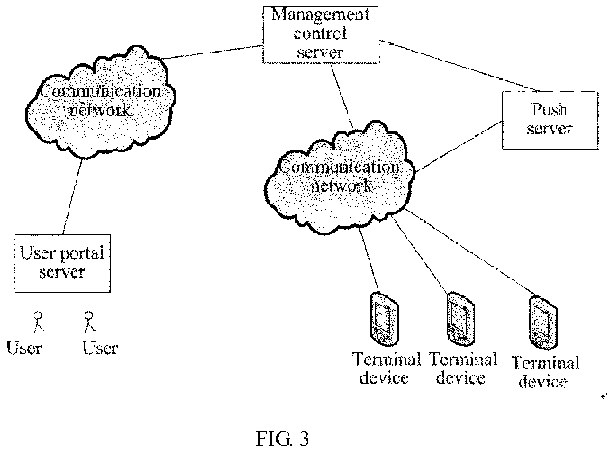

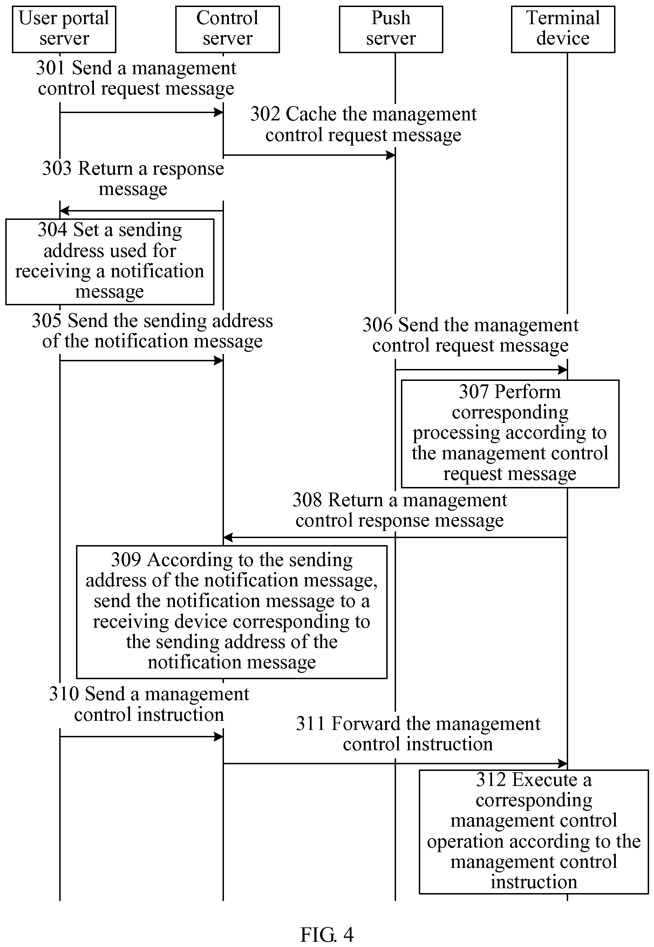

FIG. 3 is an application scenario diagram of an embodiment of the present invention. In FIG. 3, a user portal server provides a user management interface to have a dialog with a user, the user portal server establishes a communication connection with a control server through a communication network, and the control server and a push server establish communication connections with a terminal device through the communication network. In the embodiment of the present invention, the type of the communication network includes, but not limited to: General Packet Radio Service (General Packet Radio Service, GPRS), Universal Mobile Telecommunications System (Universal Mobile Telecommunications System, UMTS), UMTS, or Enhanced Data rate for GSM Evolution (Enhanced Data rate for GSM Evolution, EDEG). FIG. 4 is another schematic flow chart for implementing the present invention in the application scenario shown in FIG. 3. As shown in FIG. 4, the method includes:
Step 301: The user portal server sends a management control request message to the control server.

In the embodiment of the present invention, the user portal server may send the management control request message to the control server when being triggered externally. For example, when the user, for example, an owner of the terminal device, finds that the terminal device is left or lost, the user may trigger, through a user management interface provided by the user portal server, the user portal server to send the management control request message to the control server.

Step 302: The control server forwards the management control request message to the terminal device, and if the management control request message cannot reach the terminal device, the control server caches the management control request message in the push server.

In the embodiment of the present invention, the push server may establish a communication connection with the terminal device, and configured to proactively push the management control request message to the terminal device. If the communication connection between the push server and the terminal device cannot be established, the push server may repeatedly attempt to establish the communication connection with terminal device according to set time.

In the embodiment of the present invention, the situation that the management control request message cannot reach the terminal device includes several manners, for example, when the terminal device is powered off or out of reach, the management control request message cannot reach the terminal device, so the control server may cache the management control request message in the push server, and the push server constantly monitors the terminal device to see whether the terminal device is powered on or is in reach, and if the terminal device is powered on or is in reach, the push server establishes the communication connection with the terminal device, and proactively pushes the management control request message to the terminal device.

Step 303: The control server returns to the user portal server a response message indicating that the management control request message is not sent to the terminal device.

Step 304: The user portal server sets a sending address used for receiving the notification message;
In the embodiment of the present invention, the user portal server may pop a dialog box to the user after receiving the response message, which is returned by the control server, indicating that the management control request message is not sent to the terminal device, and the dialog box may be a user management interface, so as to prompt the user to set the sending address used for receiving the notification message in the user portal server through the dialog box.

Specifically, the user logs in the user management interface through a pre-possessed login account and login password, and the user sets the sending address of the notification message according to a setting manner provided by the user management interface. Moreover, the user management interface may further provide a sending manner of the notification message.

For example, the sending address of the notification message is a phone number: 13987654321, and the sending manner of the notification message is: sending through a short message. By setting the sending manner of the notification message at the same time of setting the sending address of the notification message, it is capable of precisely provide the sending manner of the notification message, thereby satisfying a specific requirement of the user.

Moreover, it should be further noted that, the sending address of the notification message includes, but not limited to: a short message number, a phone number, and an email address.

It should be further noted that, in the embodiment of the present invention, the order of the Step 304 and other steps is not limited, which may be preset before the process, and may be set during the process.

Step 305: The user portal server sends the sending address of the notification message to the control server for saving.

Step 306: The push server sends the management control request message to the terminal device.

In the embodiment of the present invention, when a communication channel between the push server and the terminal device is established, for example, when the terminal device is powered on or is in reach, the push server establishes the communication channel with the terminal device, and the push server sends the management control request message to the terminal device through the communication channel.

Step 307: The terminal device performs corresponding processing according to the management control request message.

In the embodiment of the present invention, the terminal device performs the corresponding processing according to the management control request message, and waits for receiving a management control instruction sent by the control server, so as to further perform the management control operation according to the management control instruction.

The manner of the terminal device performing the corresponding processing according to the management control request message includes, but not limited to: Manner 1: The terminal device acquires, according to the management control request message, a communication record of the terminal device, such as, a short message log, a call log, or a mail record.

Manner 2: The terminal device acquires, according to the management control request message, location information of the terminal device, for example, a navigation track of the terminal device the terminal device.

The manner of the terminal device performing the corresponding processing according to the management control request message may be determined through negotiation of the control server and the terminal device, which is not limited in the embodiment of the present invention.

Step 308: The terminal device returns a management control response message to the control server.

The management control response message may carry the location information of the terminal device, for example, the navigation track of the terminal device. Moreover, the management control response message further carries the communication record of the terminal device, such as, the short message log, the call log, or the mail record.

The location information and the communication record are used for the control server to be displayed for the user through the user portal server, so that the user may determine, according to the location information and communication record, whether to perform the management control operation on the terminal device.

Step 309: The control server, according to the sending address of the notification message, sends the notification message to the receiving device corresponding to the sending address of the notification message.

In the embodiment of the present invention, after the control server receives the management control response message returned by the terminal device, the control server learns that the terminal device is in a state capable of being managed and controlled, thereby triggering the notification message sending server to send the notification message to the receiving device corresponding to the sending address of the notification message.

The notification message is used to instruct performing the management control operation on the terminal device. For example, the content of the notification message may be: Dear user, the terminal device that you requested for management control at 9:00 AM fed back information at 1:00 PM, please log in the control website with your account in time for viewing and performing a related processing operation on the terminal device.

It should be noted that, according to different sending addresses of the notification message, different manners for sending the notification message to the receiving device corresponding to the sending address of the notification message exist, for example:
Manner 1: When the sending address of the notification message is a short message number, the sending the notification message to the receiving device corresponding to the sending address of the notification message may be specifically: invoking an interface provided by a short message server, and sending a short message to the receiving device corresponding to the short message number according to the short message number.

Specifically, the short message server provides a remote method invocation (Remote Method Invocation, RMI) or simple object access protocol (Simple Object Access Protocol, SOAP) interface for the control server to invoke. The control server initiates the invocation directed to an IP address and a port of the RMI or Soap provided by the short message prompt server. The control server, by invoking the IP address and the port, sends the short message number and content of the short message to the short message server. The short message server, according to the short message number, sends the content of the short message to the receiving device corresponding to the short message number. The content of the short message may be: Dear user, the terminal device that you requested for management control at XX o'clock fed back information of XX at XX o'clock, please log in to perform a related operation in time.

Manner 2: When the sending address of the notification message is a phone number, the sending the notification message to the receiving device corresponding to the sending address of the notification message may be specifically: invoking an interface provided by a phone server, and making a phone call to the receiving device corresponding to the phone number according to the phone number.

Specifically, a phone call prompt server provides an RMI or Soap interface for the control server to invoke. The control server initiates the invocation directed to an IP address or a port of the RMI or Soap provided by the phone call prompt server. The control server, by invoking the IP address and the port, sends the phone number and content of the phone call to the phone server. The phone server, according to the phone number, sends the content of the phone call to the receiving device corresponding to the phone number. The content of the phone call may be audio the same as the content of the short message.

Manner 3: When the sending address of the notification message is an email address, the sending the notification message to the receiving device corresponding to the sending address of the notification message may be specifically: invoking an interface provided by an email server, and sending an email to the receiving device corresponding to the email address according to the email address.

Specifically, an email prompt server provides an RMI or Soap interface for the control server to invoke. The control server initiates the invocation directed to an IP address or a port of the RMI or Soap provided by the email prompt server. The control server, by invoking the IP address and the port, sends the email address and content of the email to the email server. The email server, according to the email address, sends the content of the email to the receiving device corresponding to the email address.

The content of the email may be a text file the same as the content of the short message or an audio file the same as the content of the phone call.

It should be noted that, Manner 3 instructs, through an email, the user to perform the management control operation on the terminal device; however, because the user cannot check the email in time, the user cannot perform the management control operation on the terminal device in time. Therefore, compared with Manner 3, Manner 1 and Manner 2 instruct, through a short message or phone call, the user to perform the management control operation on the terminal device, thereby being capable of instructing the user timelier to perform the management control operation on the terminal device.

Step 310: If it is needed to perform the management control operation on the terminal device, the user portal server sends the management control instruction to the control server.

Specifically, after the user receives the notification message by using the receiving device corresponding to the sending address of the notification message, the user, according to information shown by the user portal server, decides which operation is performed on the terminal device, where the information includes the location information of the terminal device.

For example, if the location information of the terminal device that is shown by the user portal server indicates that the terminal device is left at home of the user, the user may not perform any management control operation on the terminal device, or perform forwarding set on incoming calls of the terminal device; and if the location information of the terminal device that is shown by the user portal server indicates that the terminal device is lost, the user backs up data on the terminal device to prevent data loss, or delete the data on the terminal device to prevent data leakage, or lock out the terminal device and send a prompt message, thereby preserving the terminal device as much as possible.

Specifically, when the user learns that it is capable of performing the management control operation on the terminal device, the user sends the management control instruction to the control server through the user portal server, so as to perform the management control operation on the terminal device according to the management control instruction.

The manner of performing the management control operation on the terminal device includes, but not limited to: backing up the data on the terminal to prevent data loss, or deleting the data on the terminal to prevent data leakage, or locking out the terminal and sending a prompt message, thereby preserving the terminal device as much as possible.

Step 311: The control server forwards the management control instruction to the terminal device.

Step 312: The terminal device executes a corresponding management control operation according to the management control instruction.

In the embodiment of the present invention, after the control server receives the management control response message returned by the terminal device, the control server sends, according to the sending address of the notification message, the notification message to the receiving device corresponding to the sending address of the notification message, so that the user can learn through the receiving device in time that it is possible to perform the management control operation on the terminal device, thereby performing the management control operation on the terminal device in time, and preserving the terminal device.

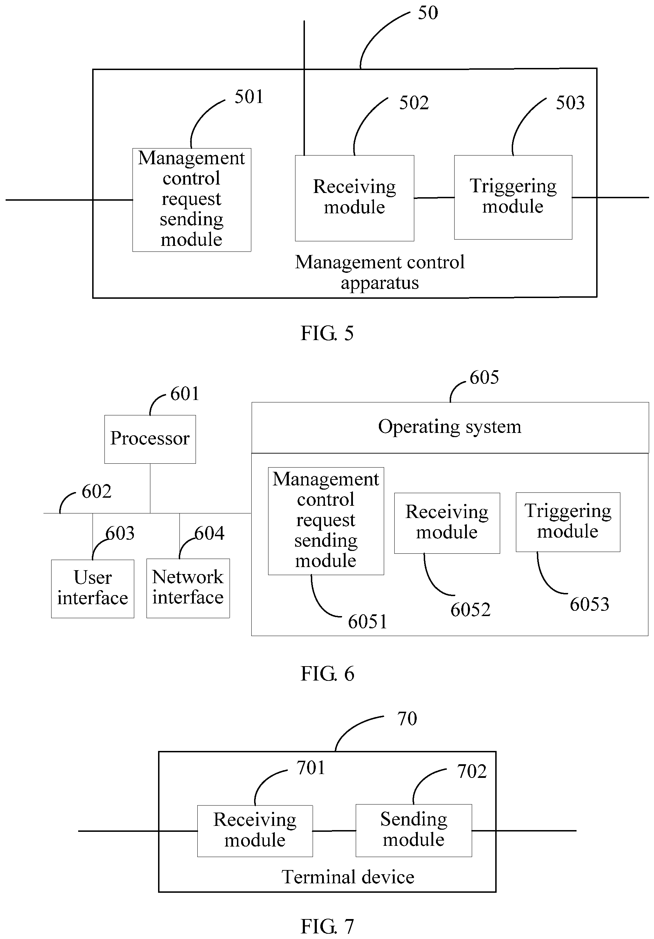

FIG. 5 is a schematic structural diagram of an embodiment of a management control apparatus according to an embodiment of the present invention. As shown in FIG. 5, the management control apparatus 50 includes a management control request sending module 501, a receiving module 502, and a triggering module 503.

The management control request sending module 501 is configured to send a management control request message to a terminal device.

The receiving module 502 is configured to receive a management control response message returned by the terminal device.

The triggering module 503 is configured to trigger, according to a sending address of a notification message, a notification message sending server to send the notification message to a receiving device corresponding to the sending address of the notification message, where the notification message is used to instruct performing a management control operation on the terminal device.

In the embodiment of the present invention, the management control apparatus receives the management control response message returned by the terminal device, and triggers, according to the sending address of the notification message, the notification message sending server to send the notification message to the receiving device corresponding to the sending address of the notification message, so that the user can learn through the receiving device in time that it is possible to perform the management control operation on the terminal device.

Optionally, in the embodiment of the present invention, the receiving module 502 may be further configured to: when the management control request message cannot reach the terminal device, receive the sending address of the notification message sent by a user portal server, and save the sending address of the notification message.

When the sending address of the notification message is a short message number, the triggering module 503 may be specifically configured to invoke an interface provided by a short message server, and send a short message to a receiving device corresponding to the short message number according to the short message number, where the short message is used to instruct the user to perform the management control operation on the terminal device through a control server; or
When the sending address of the notification message is a phone number, the triggering module 503 may be specifically configured to invoke an interface provided by a phone server, and make a phone call to a receiving device corresponding to the phone number according to the phone number, where the phone call is used to instruct the user to perform the management control operation on the terminal device through a control server; or
When the sending address of the notification message is an email address, the triggering module 503 may be specifically configured to invoke an interface provided by an email server, and send an email to the receiving device corresponding to the email address according to the email address, where the email is used to instruct the user to perform the management control operation on the terminal device through a control server.

Moreover, the receiving module 502 may be specifically configured to receive the management control response message returned by the terminal device, where the management control response message carries location information of the terminal device, and the location information of the terminal device is used to decide which management control operation is performed on the terminal device.

FIG. 6 is a schematic structural diagram of another embodiment of a management control apparatus according to an embodiment of the present invention. As shown in FIG. 6, the management control apparatus includes at least one processor 601, at least one network interface 604, a memory 605, at least one communication bus 602, and a user interface 603.

The communication bus 602 is configured to implement connection communication between the foregoing components; the user interface 603 is configured to implement interaction with a user. The processor 601 is configured to execute an executable module stored in the memory 605, for example, a computer program. The memory 605 may include a high random access memory (RAM: Random Access Memory), and may also include a non-volatile memory (non-volatile memory), for example, at least one disk memory. The at least one network interface 604 (wired or wireless) is configured to implement communication connection between the system gateway and at least one other network element, and may use the Internet, wide area network, local area network, metropolitan area network, and so on.

In some implementations, the memory 605 stores a program instruction, where the program instruction may be executed by the processor 601, and the program instruction includes a management control request sending module 6051, a receiving module 6052, and a triggering module 6053. For the specific implementation of the request sending module 6051, reference may be made to the request sending module 501 disclosed in FIG. 5, for the specific implementation of the receiving module 6052, reference may be made to the receiving module 502 disclosed in FIG. 5, and for the specific implementation of the triggering module 6053, reference may be made to the triggering module 503 disclosed in FIG. 5, which are not repeated here.

FIG. 7 is a schematic structural diagram of an embodiment of a terminal device according to an embodiment of the present invention. As shown in FIG. 7, the terminal device 70 includes a receiving module 701 and a sending module 702.

The receiving module 701 is used to receive a management control request message sent by a control server.

The sending module 702 is used to return a management control response message to the control server, so that the control server triggers, according to a sending address of a notification message, a notification message sending server to send the notification message to a receiving device corresponding to the sending address of the notification message, where the notification message is used to instruct performing a management control operation on the terminal device.

In the embodiment of the present invention, the terminal device returns the management control response message to the control server, so that the control server triggers, according to the sending address of the notification message, the notification message sending server to send the notification message to the receiving device corresponding to the sending address of the notification message, and therefore, the user can learn through the receiving device in time that it is possible to perform the management control operation on the terminal device.

Optionally, the sending module 702 may be specifically configured to return the management control response message to the control server, where the management control response message carries location information of the terminal device, and the location information of the terminal device is used to decide which management control operation is performed on the terminal device.

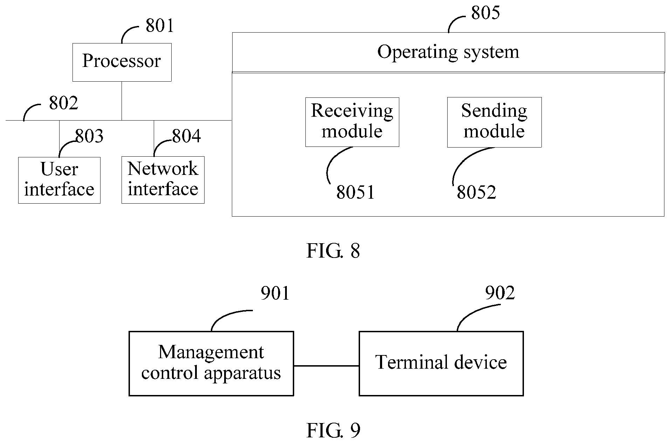

FIG. 8 is a schematic structural diagram of an embodiment of a terminal device according to an embodiment of the present invention. As shown in FIG. 8, the terminal device includes at least one processor 801, at least one network interface 804, a memory 805, at least one communication bus 802, and a user interface 803.

The communication bus 802 is configured to implement connection communication between the foregoing components; the user interface 803 is configured to implement interaction with a user. The processor 801 is configured to execute an executable module stored in the memory 805, for example, a computer program. The memory 805 may include a high random access memory (RAM: Random Access Memory), and may also include a non-volatile memory (non-volatile memory), for example, at least one disk memory. The at least one network interface 804 (wired or wireless) is configured to implement communication connection between the system gateway and at least one other network element, and may use the Internet, wide area network, local area network, metropolitan area network, and so on.

In some implementations, the memory 805 stores a program instruction, where the program instruction may be executed by the processor 801, and the program instruction includes a receiving module 8051 and a sending module 8052. For the specific implementation of the receiving module 8051, reference may be made to the receiving module 701 disclosed in FIG. 7, and for the specific implementation of the sending module 8052, reference may be made to the sending module 702 disclosed in FIG. 7, which are not repeated here.

FIG. 9 is a schematic structural diagram of an embodiment of a system for sending a notification message according to an embodiment of the present invention. As shown in FIG. 9, the system for sending a notification message includes a management control apparatus 901 and a terminal device 902.

The management control apparatus 901 is configured to send a management control request message to the terminal device 902, receive a management control response message returned by the terminal device 902, and trigger, according to a sending address of a notification message, a notification message sending server to send the notification message to a receiving device corresponding to the sending address of the notification message, where the notification message is used to instruct performing a management control operation on the terminal device 902.

The terminal device 902 is configured to receive the management control request message sent by the management control apparatus 901, and return the management control response message to the management control apparatus 901.

In the embodiment of the present invention, the management control apparatus sends the management control request message to the terminal device; the terminal device receives the management control request message sent by the management control apparatus and returns the management control response message to the management control apparatus; and the management control apparatus triggers, according to the sending address of the notification message, the notification message sending server to send the notification message to the receiving device corresponding to the sending address of the notification message, so that the user can learn through the receiving device in time that it is possible to perform the management control operation on the terminal device.

The management control apparatus 901 is further configured to: when the management control request message cannot reach terminal device 902, receive the sending address of the notification message sent by a user portal server, and save the sending address of the notification message.

It may be clearly understood by persons skilled in the art that, for the purpose of convenient and brief description, for a detailed working process of the foregoing system, apparatus, module and unit, reference may be made to the corresponding process in the method embodiments, and the details are not described here again.

Persons of ordinary skill in the art may realize that, modules, units and steps of each example described through the embodiments disclosed here can be implemented by electronic hardware, computer software, or a combination thereof. In order to clearly describe the interchangeability between the hardware and the software, compositions and steps of each example have been generally described according to functions in the foregoing descriptions. Whether these functions are executed as hardware or software depends upon the particular application and design constraint conditions of the technical solution. Persons skilled in the art may use different methods to implement the described functions for each particular application, but it should not be considered that the implementation goes beyond the scope of the present invention.

In several embodiments provided in the present application, it should be understood that the disclosed system, apparatus, and method may be implemented in other ways. For example, the described apparatus embodiments are merely exemplary. For example, the module or unit division is merely logical function division and may be other division in actual implementation. For example, multiple units or modules may be combined or integrated into another system, or some features may be ignored or not performed. Furthermore, the shown or discussed coupling or direct coupling or communication connection may be accomplished through some interfaces, apparatuses, modules or units, and may be electrical, mechanical, or in other forms.

Modules or units described as separate components may be or may not be physically separated. Components shown as modules or units may be or may not be physical modules or units, that is, may be integrated or distributed to a plurality of network modules or units. Some or all of the modules or units may be selected to achieve the objective of the solution of the embodiment according to actual demands.

In addition, functional modules or units in each embodiment of the present invention may be integrated into one processing module or unit, or may exist physically as separate modules or units, or may be integrated into one module or unit by two or more modules or units. The integrated module or unit may be implemented through hardware, or may also be implemented in a form of a software functional module.

When the integrated module or unit is implemented in the form of the software functional module or unit and sold or used as a separate product, the integrated module or unit may be stored in a computer readable memory medium. Therefore, the technical solution of the present invention or the part that makes contributions to the prior art may be substantially embodied in the form of a software product. The computer software product is stored in a memory medium, and includes several instructions to instruct computer device (such as, a personal computer, a server, or network device) to perform all or a part of steps of the method as described in the embodiments of the present invention. The memory medium includes various media capable of storing program codes, such as, a flash disk, a mobile hard disk, a Read-Only Memory (ROM, Read-Only Memory), a Random Access Memory (RAM, Random Access Memory), a magnetic disk or an optical disk.

The foregoing descriptions are merely specific embodiments of the present invention, but are not intended to limit the protection scope of the present invention. Equivalent modifications or replacements readily apparent to persons skilled in the prior art within the technical scope of the present invention should fall within the protection scope of the present invention. Therefore, the protection scope of the present invention is subject to the appended claims.

## Claims

1. A method for sending a notification message, comprising:
Sending (101), by a control server, a management control request message to a terminal device;
Receiving (102), by the control server, a management control response message returned by the terminal device, and triggering, according to a sending address of a notification message, a notification message sending server to send the notification message to a receiving device corresponding to the sending address of the notification message, wherein the notification message is used to instruct performing a management control operation on the terminal device;
wherein, after the sending, by the control server, the management control request message to the terminal device, the method further comprises:
when the management control request message cannot reach the terminal device, receiving, by the control server, the sending address of the notification message sent by a user portal server, and saving the sending address of the notification message;
wherein, when the sending address of the notification message is a short message number, the triggering the notification message sending server to send the notification message to the receiving device corresponding to the sending address of the notification message, wherein the notification message is used to instruct a user to perform the management control operation on the terminal device through the control server, comprises:
invoking an interface provided by a short message server, and sending a short message to a receiving device corresponding to the short message number according to the short message number, wherein the short message is used to instruct the user to perform the management control operation on the terminal device through the control server; or
when the sending address of the notification message is a phone number, the triggering the notification message sending server to send the notification message to the receiving device corresponding to the sending address of the notification message, wherein the notification message is used to instruct a user to perform the management control operation on the terminal device through the control server, comprises:
invoking an interface provided by a phone server, and making a phone call to a receiving device corresponding to the phone number according to the phone number, wherein the phone call is used to instruct the user to perform the management control operation on the terminal device through the control server.

2. The method according to claim 1, wherein, the management control response message carries location information of the terminal device, and the location information of the terminal device is used to decide which management control operation is performed on the terminal device.

3. The method according to any one of claims 1 to 2, further comprising:
receiving, by the control server, a management control instruction sent by the user portal server, and forwarding the management control instruction to the terminal device, so that the terminal device performs the management control operation according to the management control instruction.

4. A management control apparatus, comprising:
a management control request sending module (501), configured to send a management control request message to a terminal device;
a receiving module (502), configured to receive a management control response message returned by the terminal device; and
a triggering module (503), configured to trigger, according to a sending address of a notification message, a notification message sending server to send the notification message to a receiving device corresponding to the sending address of the notification message, wherein the notification message is used to instruct performing a management control operation on the terminal device;
wherein, the receiving module (502) is further configured to: when the management control request message cannot reach the terminal device, receive the sending address of the notification message sent by a user portal server, and save the sending address of the notification message;
wherein, when the sending address of the notification message is a short message number, the triggering module is specifically configured to invoke an interface provided by a short message server, and send a short message to a receiving device corresponding to the short message number according to the short message number, wherein the short message is used to instruct a user to perform the management control operation on the terminal device through a control server; or
when the sending address of the notification message is a phone number, the triggering module is specifically configured to invoke an interface provided by a phone server, and make a phone call to a receiving device corresponding to the phone number according to the phone number, wherein the phone call is used to instruct a user to perform the management control operation on the terminal device through a control server.

5. The apparatus according to claim 4, wherein, the receiving module (502) is specifically configured to receive the management control response message returned by the terminal device, the management control response message carries location information of the terminal device, and the location information of the terminal device is used to decide which management control operation is performed on the terminal device.

## Patentansprüche

1. Verfahren zum Senden einer Benachrichtigungsnachricht, umfassend:
Senden (101), durch einen Steuerungsserver, einer Verwaltungssteuerungsanforderungsnachricht an eine Endgerätvorrichtung;
Empfangen (102), durch den Steuerungsserver, einer von der Endgerätvorrichtung zurückgegebenen Verwaltungssteuerungsantwortnachricht, und Ansteuern, gemäß einer Sendeadresse einer Benachrichtigungsnachricht, eines Benachrichtigungsnachricht-Sendeservers zum Senden der Benachrichtigungsnachricht an eine der Sendeadresse der Benachrichtigungsnachricht entsprechende Empfangsvorrichtung, wobei die Benachrichtigungsnachricht verwendet wird, um ein Durchführen eines Verwaltungssteuerungsvorgangs an der Endgerätvorrichtung anzuweisen;
wobei, nach dem Senden, durch den Steuerungsserver, der Verwaltungssteuerungsanforderungsnachricht an die Endgerätvorrichtung, das Verfahren ferner umfasst:
wenn die Verwaltungssteuerungsanforderungsnachricht die Endgerätvorrichtung nicht erreichen kann, Empfangen, durch den Steuerungsserver, der Sendeadresse der durch einen Benutzerportalserver gesendeten Benachrichtigungsnachricht, und Speichern der Sendeadresse der Benachrichtigungsnachricht;
wobei, wenn die Sendeadresse der Benachrichtigungsnachricht eine Kurznachrichtennummer ist, das Ansteuern des Benachrichtigungsnachricht-Sendeservers zum Senden der Benachrichtigungsnachricht an die der Sendeadresse der Benachrichtigungsnachricht entsprechende Empfangsvorrichtung, wobei die Benachrichtigungsnachricht verwendet wird, um einen Benutzer anzuweisen, den Verwaltungssteuerungsvorgang an der Endgerätvorrichtung über den Steuerungsserver durchzuführen, umfasst:
Aufrufen einer durch einen Kurznachrichtenserver bereitgestellten Schnittstelle, und Senden einer Kurznachricht an eine der Kurznachrichtennummer entsprechende Empfangsvorrichtung gemäß der Kurznachrichtennummer, wobei die Kurznachricht verwendet wird, um den Benutzer anzuweisen, den Verwaltungssteuerungsvorgang an der Endgerätvorrichtung über den Steuerungsserver durchzuführen; oder
wenn die Sendeadresse der Benachrichtigungsnachricht eine Telefonnummer ist, das Ansteuern des Benachrichtigungsnachricht-Sendeservers zum Senden der Benachrichtigungsnachricht an die der Sendeadresse der Benachrichtigungsnachricht entsprechende Empfangsvorrichtung, wobei die Benachrichtigungsnachricht verwendet wird, um einen Benutzer anzuweisen, den Verwaltungssteuerungsvorgang an der Endgerätvorrichtung über den Steuerungsserver durchzuführen, umfasst:
Aufrufen einer durch einen Telefonserver bereitgestellten Schnittstelle, und Durchführen eines Telefonanrufs zu einer der Telefonnummer entsprechenden Empfangsvorrichtung gemäß der Telefonnummer, wobei der Telefonanruf verwendet wird, um den Benutzer anzuweisen, den Verwaltungssteuerungsvorgang an der Endgerätvorrichtung über den Steuerungsserver durchzuführen.

2. Verfahren nach Anspruch 1, wobei die Verwaltungssteuerungsantwortnachricht Standortinformationen der Endgerätvorrichtung enthält, und die Standortinformationen der Endgerätvorrichtung verwendet werden, um zu entscheiden, welcher Verwaltungssteuerungsvorgang an der Endgerätvorrichtung durchgeführt wird.

3. Verfahren nach einem der Ansprüche 1 bis 2, ferner umfassend:
Empfangen, durch den Steuerungsserver, einer durch den Benutzerportalserver gesendeten Verwaltungssteuerungsanweisung, und Weiterleiten der Verwaltungssteuerungsanweisung an die Endgerätvorrichtung, sodass die Endgerätvorrichtung den Verwaltungssteuerungsvorgang gemäß der Verwaltungssteuerungsanweisung durchführt.

4. Verwaltungssteuerungseinrichtung, umfassend:
ein Verwaltungssteuerungsanforderung-Sendemodul (501), das ausgestaltet ist, eine Verwaltungssteuerungsanforderungsnachricht an eine Endgerätvorrichtung zu senden;
ein Empfangsmodul (502), das ausgestaltet ist, eine von der Endgerätvorrichtung zurückgegebene Verwaltungssteuerungsantwortnachricht zu empfangen; und
ein Ansteuerungsmodul (503), das ausgestaltet ist, gemäß einer Sendeadresse einer Benachrichtigungsnachricht, einen Benachrichtigungsnachricht-Sendeserver zum Senden der Benachrichtigungsnachricht an eine der Sendeadresse der Benachrichtigungsnachricht entsprechende Empfangsvorrichtung anzusteuern, wobei die Benachrichtigungsnachricht verwendet wird, um ein Durchführen eines Verwaltungssteuerungsvorgangs an der Endgerätvorrichtung anzuweisen;
wobei das Empfangsmodul (502) ferner zu Folgendem ausgestaltet ist: wenn die Verwaltungssteuerungsanforderungsnachricht die Endgerätvorrichtung nicht erreichen kann, Empfangen der Sendeadresse der durch einen Benutzerportalserver gesendeten Benachrichtigungsnachricht, und Speichern der Sendeadresse der Benachrichtigungsnachricht;
wobei, wenn die Sendeadresse der Benachrichtigungsnachricht eine Kurznachrichtennummer ist, das Ansteuermodul insbesondere ausgestaltet ist, eine durch einen Kurznachrichtenserver bereitgestellte Schnittstelle aufzurufen, und eine Kurznachricht an eine der Kurznachrichtennummer entsprechende Empfangsvorrichtung gemäß der Kurznachrichtennummer zu senden, wobei die Kurznachricht verwendet wird, um einen Benutzer anzuweisen, den Verwaltungssteuerungsvorgang an der Endgerätvorrichtung über einen Steuerungsserver durchzuführen; oder
wenn die Sendeadresse der Benachrichtigungsnachricht eine Telefonnummer ist, das Ansteuermodul insbesondere ausgestaltet ist, eine durch einen Telefonserver bereitgestellte Schnittstelle aufzurufen, und einen Telefonanruf zu einer der Telefonnummer entsprechenden Empfangsvorrichtung gemäß der Telefonnummer durchzuführen, wobei der Telefonanruf verwendet wird, um einen Benutzer anzuweisen, den Verwaltungssteuerungsvorgang an der Endgerätvorrichtung über einen Steuerungsserver durchzuführen.

5. Einrichtung nach Anspruch 4, wobei das Empfangsmodul (502) insbesondere ausgestaltet ist, die von der Endgerätvorrichtung zurückgegebene Verwaltungssteuerungsantwortnachricht zu empfangen, wobei die Verwaltungssteuerungsantwortnachricht Standortinformationen der Endgerätvorrichtung enthält, und die Standortinformationen der Endgerätvorrichtung verwendet werden, um zu entscheiden, welcher Verwaltungssteuerungsvorgang an der Endgerätvorrichtung durchgeführt wird.

## Revendications

1. Procédé pour envoyer un message de notification, consistant :
à envoyer (101), au moyen d'un serveur de commande, un message de demande de contrôle de gestion à un dispositif terminal ;
à recevoir (102), au moyen du serveur de commande, un message de réponse de contrôle de gestion renvoyé par le dispositif terminal, et à déclencher, en fonction d'une adresse d'envoi d'un message de notification, un serveur d'envoi de message de notification pour envoyer le message de notification à un dispositif de réception correspondant à l'adresse d'envoi du message de notification, dans lequel le message de notification est utilisé pour donner comme instruction d'effectuer une opération de contrôle de gestion sur le dispositif terminal ;
dans lequel, après l'envoi, par le serveur de commande, du message de demande de contrôle de gestion au dispositif terminal, le procédé consiste en outre :
lorsque le message de demande de contrôle de gestion ne peut pas atteindre le dispositif terminal, à recevoir, au moyen du serveur de commande, l'adresse d'envoi du message de notification envoyé par un serveur de portail d'utilisateur et à sauvegarder l'adresse d'envoi du message de notification ;
dans lequel, lorsque l'adresse d'envoi du message de notification est un numéro de message court, le déclenchement du serveur d'envoi de message de notification pour envoyer le message de notification au dispositif de réception correspondant à l'adresse d'envoi du message de notification, dans lequel le message de notification est utilisé pour donner comme instruction à un utilisateur d'effectuer l'opération de contrôle de gestion sur le dispositif terminal par le biais du serveur de commande, consiste :
à invoquer une interface fournie par un serveur de messages courts et à envoyer un message court à un dispositif de réception correspondant au numéro de message court en fonction du numéro de message court, dans lequel le message court est utilisé pour donner comme instruction à l'utilisateur d'effectuer l'opération de contrôle de gestion sur le dispositif terminal par le biais du serveur de commande ; ou
lorsque l'adresse d'envoi du message de notification est un numéro de téléphone, le déclenchement du serveur d'envoi de message de notification pour envoyer le message de notification au dispositif de réception correspondant à l'adresse d'envoi du message de notification, dans lequel le message de notification est utilisé pour donner comme instruction à un utilisateur d'effectuer l'opération de contrôle de gestion sur le dispositif terminal par le biais du serveur de commande, consiste :
à invoquer une interface fournie par un serveur téléphonique et à réaliser un appel téléphonique vers un dispositif de réception correspondant au numéro de téléphone en fonction du numéro de téléphone, dans lequel l'appel téléphonique est utilisé pour donner comme instruction à l'utilisateur d'effectuer l'opération de contrôle de gestion sur le dispositif terminal par le biais du serveur de commande.

2. Procédé selon la revendication 1, dans lequel le message de réponse de contrôle de gestion comporte des informations de localisation du dispositif terminal et les informations de localisation du dispositif terminal sont utilisées pour décider quelle opération de contrôle de gestion est effectuée sur le dispositif terminal.

3. Procédé selon l'une quelconque des revendications 1 à 2, consistant en outre :
à recevoir, au moyen du serveur de commande, une instruction de contrôle de gestion envoyée par le serveur de portail d'utilisateur et à expédier l'instruction de contrôle de gestion au dispositif terminal de telle sorte que le dispositif terminal effectue l'opération de contrôle de gestion en fonction de l'instruction de contrôle de gestion.

4. Appareil de contrôle de gestion comprenant :
un module d'envoi de demande de contrôle de gestion (501), configuré pour envoyer un message de demande de contrôle de gestion à un dispositif terminal ;
un module de réception (502), configuré pour recevoir un message de réponse de contrôle de gestion renvoyé par le dispositif terminal ; et
un module de déclenchement (503), configuré pour déclencher, en fonction d'une adresse d'envoi d'un message de notification, un serveur d'envoi de message de notification pour envoyer le message de notification à un dispositif de réception correspondant à l'adresse d'envoi du message de notification, dans lequel le message de notification est utilisé pour donner comme instruction d'effectuer une opération de contrôle de gestion sur le dispositif terminal ;
dans lequel le module de réception (502) est en outre configuré : lorsque le message de demande de contrôle de gestion ne peut pas atteindre le dispositif terminal, pour recevoir l'adresse d'envoi du message de notification envoyé par un serveur de portail d'utilisateur et pour sauvegarder l'adresse d'envoi du message de notification ;
dans lequel, lorsque l'adresse d'envoi du message de notification est un numéro de message court, le module de déclenchement est spécialement configuré pour invoquer une interface fournie par un serveur de messages courts et pour envoyer un message court à un dispositif de réception correspondant au numéro de message court en fonction du numéro de message court, dans lequel le message court est utilisé pour donner comme instruction à un utilisateur d'effectuer l'opération de contrôle de gestion sur le dispositif terminal par le biais d'un serveur de commande ; ou
lorsque l'adresse d'envoi du message de notification est un numéro de téléphone, le module de déclenchement est spécialement configuré pour invoquer une interface fournie par un serveur téléphonique et pour réaliser un appel téléphonique vers un dispositif de réception correspondant au numéro de téléphone en fonction du numéro de téléphone, dans lequel l'appel téléphonique est utilisé pour donner comme instruction à un utilisateur d'effectuer l'opération de contrôle de gestion sur le dispositif terminal par le biais d'un serveur de commande.

5. Appareil selon la revendication 4, dans lequel le module de réception (502) est spécialement configuré pour recevoir le message de réponse de contrôle de gestion renvoyé par le dispositif terminal, le message de réponse de contrôle de gestion comporte des informations de localisation du dispositif terminal et les informations de localisation du dispositif terminal sont utilisées pour décider quelle opération de contrôle de gestion est effectuée sur le dispositif terminal.
